# EUROPÄISCHE PATENTSCHRIFT

(11) **EP 0 859 304 B1**
(45) Veröffentlichungstag und Bekanntmachung des Hinweises auf die Patenterteilung: **22.12.1999**
(21) Anmeldenummer: 98102149.6
(22) Anmeldetag: 07.02.1998
(51) Int. Cl.: G05D 23/19, G05D 23/32, G05D 27/00, H05B 1/02, D06F 33/02, F26B 25/22

(54) **Verfahren und eine Vorrichtung zum Einstellen der Temperatur eines Prozessmediums, insbesondere der Waschflotte in einer Waschmaschine**
Method and device to set the temperature of a processing medium,especially the scouring liquor of a washing machine
Methode et dispositif de fixation de la température du milieu d'un procédé, particulièrement du produit de récurage dans une machine à laver

(30) Priorität: 14.02.1997 DE 19705666
(43) Veröffentlichungstag der Anmeldung: 19.08.1998
(73) Patentinhaber: AEG Hausgeräte GmbH, 90429 Nürnberg (DE)
(72) Erfinder: Steinmüller, Harald, 91611 Lehrberg (DE)

(56) Entgegenhaltungen:
- EP-A- 0 523 864
- DE-C- 19 625 868
- US-A- 5 219 119

## Beschreibung

Die Erfindung betrifft ein Verfahren und eine Vorrichtung zum Einstellen der Temperatur eines Prozeßmediums sowie eine Waschmaschine mit einer solchen Vorrichtung.

Zum Waschen von Wäsche im Haushalt wird die Wäsche in einer Waschmaschine in verschiedenen Programmschritten mit wechselnder Waschflotte gewaschen. In einer bekannten Ausführungsform wird die Wäsche in eine in einem Waschbehälter (Laugenbehälter) drehbar gelagerten Wäschetrommel der Waschmaschine eingebracht und dem Waschbehälter oder der Wäschetrommel die Waschflotte zugeführt. Die Waschflotte ist in einem Waschprogramm (Waschgang) im allgemeinen mit Reinigungsmittel versetztes Wasser (Waschflüssigkeit, Waschlauge) und in einem Spülprogramm (Spülgang) in der Regel nur Wasser. Im Waschprogramm können verschiedene Waschtemperaturen eingestellt werden, die üblicherweise von Leitungswassertemperatur ("Kalt") bis zu 95°C bei Kochwäsche reichen. Zum Aufheizen des zugeführten Wassers oder der Waschflüssigkeit auf die entsprechende Temperatur weist die Waschmaschine einen oder mehrere im unteren Bereich des Waschbehälters angeordnete, elektrisch beheizte Rohrheizkörper auf. Für die Temperaturregelung der Temperatur der Waschflotte werden mechanische Temperatursensoren wie beispielsweise Flüssigkeitsausdehnungsfühler oder Bimetallsensoren oder elektronische Temperaturfühler wie beispielsweise Heißleiter (NTC-Widerstände) im Waschbehälter angeordnet.

Ein Waschgang umfaßt üblicherweise drei Programmphasen (Programmschritte), nämlich erstens eine Aufheizphase, während der die Wäscheflotte auf eine vorgegebene Waschtemperatur (Maximaltemperatur) aufgeheizt wird, zweitens eine Nachwaschphase, während der die Temperatur der Waschflotte auf die Waschtemperatur geregelt wird, und drittens eine Abkühlphase, während der nicht mehr geheizt wird. Die Zeitdauer der Aufheizphase wird durch das Erreichen der vorgegebenen Waschtemperatur definiert. Die Zeitintervalle (Laufdauern) der weiteren Programmschritte werden dagegen fest vorgegeben (*HEA*-*Bilderdienst, Heft 6.5 Wäschepflege im Haushalt, September 1988, Seiten 2 bis 26*).

Das Reinigungsergebnis beim Waschprozeß ist abhängig von dem Heizenergieeintrag in den Waschprozeß. Der Energietransport von den Heizkörpern über das Wasser zu der Wäsche (Beladung) variiert jedoch mit der Wasserzulaufmenge, dem Wasserstand im Waschbehälter und dem Verhältnis von aktueller Heizleistung der Heizkörper zu der Energietransportfähigkeit der Waschflotte. Dadurch ist es möglich, daß nur ein Teil der für eine gewünschte Reinigungswirkung erforderlichen thermischen Energie in den Waschprozeß eingebracht wird.

Der Erfindung liegt deshalb die Aufgabe zugrunde, ein Verfahren und eine Vorrichtung zum Einstellen der Temperatur eines Prozeßmediums anzugeben, die einen verbesserten Wärmeenergieeintrag in den Prozeß ermöglichen.

Diese Aufgabe wird gemäß der Erfindung gelöst mit den Merkmalen des Anspruchs 1 bzw. des Anspruchs 7.

Das Verfahren zum Einstellen der Temperatur eines Prozeßmediums umfaßt folgende Verfahrensschritte:
a) Regeln der Temperatur des Prozeßmediums auf ein vorgegebenes Regelintervalls zwischen einer oberen Schalttemperatur und einer unteren Schalttemperatur durch Steuern von dem Prozeßmedium zugeführter thermischer Energie (Heizenergie, Wärme),
b) Fortlaufendes Ermitteln der dem Prozeßmedium seit Beginn des Temperaturregelungsprozesses gemäß Schritt a) bereits zugeführten thermischen Gesamtenergie während des Temperaturregelungsprozesses
c) Unterbrechen der Zufuhr von thermischer Energie zum Prozeßmedium, wenn die genannte Gesamtenergie einen vorgegebenen Prozeßenergiewert überschreitet.

Die Vorrichtung zum Einstellen der Temperatur eines Prozeßmediums gemäß Anspruch 7 umfaßt
a) eine Heizeinrichtung zum Zuführen von thermischer Energie zum Prozeßmedium,
b) einen Temperatursensor zum Messen der Temperatur des Prozeßmediums,
c) eine Regeleinrichtung, die mit der Heizeinrichtung und dem Temperatursensor jeweils verbunden ist und in einem Temperaturregelungsprozeß durch Steuern der Heizeinrichtung die Temperatur des Prozeßmediums innerhalb eines vorgegebenen Regelintervalls zwischen einer oberen Schalttemperatur und einer unteren Schalttemperatur zu halten sucht, und
d) eine Auswerteeinrichtung, die mit der Regeleinrichtung verbunden ist und während des Temperaturregelungsprozesses fortlaufend die Summe der seit Beginn des Temperaturregelungsprozesses dem Prozeßmedium von der Heizeinrichtung zugeführten thermischen Energie ermittelt und der Regeleinrichtung ein Abschaltsignal zuführt, wenn die genannten Summe der zugeführten thermischen Energie einen vorgegebenen Prozeßenergiewert überschreitet,
e) wobei die Regeleinrichtung die Heizeinrichtung bei Vorliegen des Abschaltsignals abschaltet.

Gemäß der Erfindung wird somit der zeitliche Ablauf des Temperaturregelungsprozesses nicht wie beim Stand der Technik durch eine fest vorgegebene Laufzeit festgelegt, sondern durch das Sicherstellen eines ausreichenden Eintrags von Heizenergie, nämlich des Prozeßenergiewertes, in das Prozeßmedium.

Vorteilhafte Ausgestaltungen des Verfahrens und der Vorrichtung ergeben sich aus den vom Anspruch 1 bzw. Anspruch 7 jeweils abhängigen Ansprüchen.

Eine bevorzugte Anwendung finden das Verfahren und die Vorrichtung bei der Reinigung von Wäsche mit einer Waschmaschine. Geregelt wird dann die Temperatur der zum Reinigen verwendeten Waschflotte (Waschflüssigkeit, Spülflüssigkeit, Waschlauge) als Prozeßmedium im Laugenbehälter (Wäschebottich) der Waschmaschine. Da in den Waschprozeß durch die Maßnahmen gemäß der Erfindung immer die erforderliche Mindestheizenergie eingebracht wird, wird ein gutes Waschergebnis unabhängig von der Beladung, der Wäscheart und der Waschflottenmenge sichergestellt.

In einer besonders vorteilhaften Ausführungsform wird der Prozeßenergiewert von der Auswerteeinrichtung als Funktion wenigstens einer Prozeßgröße vorgegeben, vorzugsweise mittels einer vorab gespeicherten Wertetabelle oder Eichformel. Die wenigstens eine Prozeßgröße wird vorzugsweise gemessen, kann aber auch über die Prozeßsteuerung, insbesondere die Programmwahl bei der Waschmaschine, eingegeben werden.

Prozeßgrößen können insbesondere die Menge des zu erhitzenden Prozeßmediums, also beim Waschen die Waschflottenmenge (Laugen- oder Wassermenge), ferner die Durchflußrate (Volumenstrom) des Prozeßmediums an der Heizeinrichtung und schließlich die Wärmekapazität des Prozeßmediums sein. Beim Waschen kommt als weitere Prozeßgröße die Wäschemenge (Beladung der Wäschetrommel) hinzu, die ein entscheidender Faktor dafür ist, wieviel Waschflotte von der Wäsche gebunden wird und wieviel Waschflotte darüberhinaus für die Durchflutung der Wäsche benötigt wird. Ferner kann auch die Wäscheart, insbesondere das Wasseraufnahmevermögen der Wäsche, als Prozeßgröße berücksichtigt werden.

Im allgemeinen ist die Anfangstemperatur des Prozeßmediums am Anfang des Temperaturregelungsprozesses niedriger als die untere Schalttemperatur des Regelintervalls. Dadurch beginnt der Temperaturregelungsprozeß mit einem Aufheizprozeß, während dessen das Prozeßmedium, insbesondere die Waschflotte, zunächst auf die obere Schalttemperatur der Regelung aufgeheizt wird, und geht dann in eine eingeregelte Phase über, in der die Temperatur des Prozeßmediums innerhalb des Regelintervalls gehalten wird.

Vorteilhaft ist ferner das Prüfen einer zusätzlichen Bedingung vor dem Unterbrechen der Wärmezufuhr zum Prozeßmedium bzw. Abschalten der Heizeinrichtung, nämlich die Voraussetzung, daß vorher im Prozeßmedium eine vorbestimmte Minimaltemperatur oberhalb der unteren Schalttemperatur, vorzugsweise die obere Schalttemperatur, wenigstens einmal erreicht worden sein muß. Dadurch kann ein mögliches Fehlverhalten, insbesondere eine zu niedrige Temperatur für den Waschvorgang, ausgeschlossen werden.

Wenn die dem Prozeßmedium durch die Heizeinrichtung zugeführte Heizleistung im wesentlichen konstant ist oder zumindest in ihrem zeitlichen Verlauf bekannt ist, wird in einer besonders vorteilhaften Ausführungsform als Maß für die Summe der seit Beginn des Temperaturregelungsprozesses dem Prozeßmedium zugeführten thermischen Energie die jeweilige Laufdauer des Temperaturregelungsprozesses sowie als Maß für den Prozeßenergiewert eine zugehörige vorbestimmte Prozeßdauer für den gesamten Temperaturregelungsprozeß verwendet. Die thermische Energie entspricht nämlich dem zeitlichen Integral der Heizleistung über dem Heizzeitintervall, bei konstanter Heizleistung dem Produkt aus Heizleistung und Heizzeit. Insbesondere kann die Heizleistung der Heizeinrichtung aus dem Temperaturverlauf (Temperaturanstiegsverhalten) des Prozeßmediums beim Aufheizprozeß bestimmt werden. Dadurch kann eine Abweichung der realen Heizleistung von der Nominalheizleistung der Heizeinrichtung berücksichtigt werden. Weiter kann bei bekannter Flotte- und Wäschemenge eine entsprechend korrigierte Wertetabelle oder Eichformel zur Ableitung der benötigten Prozeßzeit (Heizzeit) verwendet werden.

Die Erfindung wird im folgenden anhand von schematischen Zeichnungen weiter erläutert.

Es zeigen:
- FIG 1: eine Prinzipskizze einer Vorrichtung zum Einstellen der Temperatur eines Prozeßnmediums
- FIG 2: ein Diagramm des zeitlichen Temperaturverlaufs bei einem Waschvorgang gemäß dem Stand der Technik mit einer relativ guten Heizenergieübertragung
- FIG 3: ein Diagramm der zeitlichen Temperaturverläufe bei einem Waschvorgang gemäß dem Stand der Technik mit einer relativ schlechten Heizenergieübertragung
und
- FIG 4: ein Diagramm der zeitlichen Temperaturverläufe bei einem Waschvorgang gemäß der Erfindung in einem Fall mit einer schlechten Heizenergieübertragung und im anderen Fall mit einer guten Heizenergieübertragung.
Einander entsprechende Teile und Größen sind in den FIG 1 bis 4 mit denselben Bezugszeichen versehen.

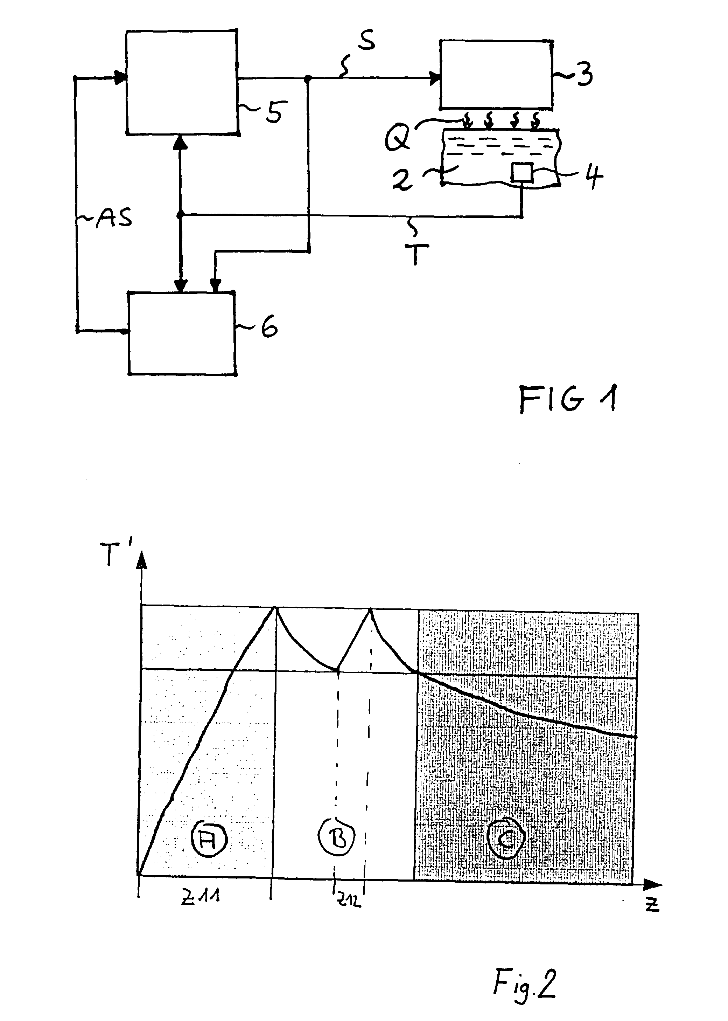

In FIG 1 ist eine Vorrichtung zum Einstellen der Temperatur eines vorzugsweise gasförmigen oder flüssigen Prozeßmediums 2 in einer Prinzipzeichnung dargestellt. Die Vorrichtung umfaßt eine dem Prozeßmedium 2 zugeordnete, elektrische Heizeinrichtung 3 zum Zuführen von thermischer Energie (Wärme, Heizenergie) Q zum Prozeßmedium 2 und einen im oder am Prozeßmedium 2 angeordneten Temperatursensor 4, der die Temperatur des Prozeßmediums 2 mißt und ein entsprechendes Temperatursignal T als Maß für diese Temperatur liefert. Ferner weist die Vorrichtung eine Regeleinrichtung 5 und eine Auswerteeinrichtung 6 auf, die jeweils mit dem Temperatursensor 4 sowie miteinander verbunden sind.

Die Regeleinrichtung 5 regelt die vom Temperatursensor 4 gemessene Temperatur auf eine vorgegebene Solltemperatur durch Ansteuern der Heizeinrichtung 3 mit einem Steuersignal S. Die von der Heizeinrichtung 3 erzeugte thermische Energie Q ist die Stellgröße der Temperaturregelung. Das Ansteuern der Heizeinrichtung 3 erfolgt vorzugsweise durch Takten, d.h. durch Ein- und Ausschalten der Heizeinrichtung 3 mithilfe eines Schalters. Das Steuersignal S ist dann ein binäres Signal mit einem ersten logischen Zustand (Einschaltwert) für den eingeschalteten Zustand der Heizeinrichtung 3 und einem zweiten logischen Zustand (Ausschaltwert) für den ausgeschalteten Zustand der Heizeinrichtung 3. Die Heizeinrichtung 3 wird somit entweder mit einer vorgegebenen festen maximalen Heizleistung P oder mit Heizleistung Null betrieben.

Die Auswerteeinrichtung 6 überwacht während des Temperaturregelungsprozesses der Regeleinrichtung 5 den zeitlichen Verlauf des binären Steuersignals S der Regeleinrichtung 5 und summiert fortlaufend die Zeitintervalle, während denen das Steuersignal S seinen Einschaltwert annimmt, die Heizeinrichtung 3 also eingeschaltet ist und die als Einschaltzeiten oder Heizzeiten bezeichnet werden können. Die aktuelle Summe σ der Einschaltzeiten vergleicht die Auswerteeinrichtung 6 mit einer vorgegebenen maximalen Einschaltzeit τ für die Heizeinrichtung 3. Wenn die aktuelle Summe σ der Einschaltzeiten die vorgegebene maximale Einschaltzeit τ als Schwellwert erreicht oder überschreitet, generiert die Auswerteeinrichtung 6 ein Abschaltsignal AS, das der Regeleinrichtung 5 zugeleitet wird. Sobald die Regeleinrichtung 5 das Abschaltsignal AS der Auswerteeinrichtung 6 empfängt, bricht sie den Temperaturregelungsprozeß ab und schaltet die Heizeinrichtung 3 mittels des entsprechenden Steuersignals S ab.

Die beschrieben Überwachung der summierten Einschaltzeit σ der Heizeinrichtung 3 durch die Auswerteeinrichtung 6 entspricht einer Überwachung der dem Prozeßmedium 2 zugeführten aktuellen thermischen Gesamtenergie ε = P σ , die dem Produkt aus der maximalen Heizleistung P der Heizeinrichtung 3 und der aktuellen Summe σ der Einschaltzeiten entspricht, auf Überschreiten eines vorgegebenen Prozeßenergiewertes E = P τ .

Es ist auch eine Ausführungsform möglich, bei der die Auswerteeinrichtung 6 anstelle des Steuersignals S das Temperatursignal T zum Bestimmen der Heizzeiten auswertet. Ein ansteigendes Temperatursignal T entspricht dann einer eingeschalteten Heizeinrichtung 3 und ein fallendes Temperatursignal T einer ausgeschalteten Heizeinrichtung 3. Während der Anstiegzeiten des Tempeatursignals T kann aus der positiven Steigung (zeitliche Ableitung) des Temperatursignals T insbesondere auch die aktuelle Heizleistung P der Heizeinrichtung 3 bestimmt werden.

Die maximale Einschaltzeit τ oder die maximale Prozeßenergie E werden von der Auswerteeinrichtung 6 vorzugsweise als Funktion von gemessenen oder durch exteren Eingabe festgelegten Prozeßgrößen mithilfe einer durch Kalibriervorgänge bestimmten und in einer Speichereinrichtung gespeicherten Formel oder Wertetabelle berechnet. Dazu enthält die Auswerteeinrichtung 6 vorzugsweise einen Mikroprozessor.

Die Vorrichtung gemäß FIG 1 und das mit ihr durchgeführte Verfahren finden eine bevorzugte Anwendung beim Waschen von Wäsche in einer automatischen Waschmaschine. Das Prozeßmedium 2 ist dann die Waschflotte im Waschbehälter, in dem sich vorzugsweise die drehbare Trommel zur Aufnahme der Wäsche befindet. Die Heizeinrichtung 3 und der Temperatursensor 4 sind im allgemeinen in einem unteren Bereich des Waschbehälters angeordnet, wo sich die Waschflotte und der Wasserzulauf befinden. Als Heizeinrichtung 3 werden im allgemeinen elektrisch beheizte Rohrheizkörper verwendet, die in direktem Kontakt zur Waschflotte stehen. Üblicherweise eingesetzte Temperatursensoren 4 sind Flüssigkeitsausdehnungsführler oder Bimetallfühler oder auch NTC-Heißleiter.

Bei einem Waschprozeß in einer solchen Waschmaschine ist die Energieübertragung von der Heizeinrichtung 3 zur Wäsche in der Trommel abhängig von mehreren Prozeßgrößen, insbesondere von Toleranzen im Zulauf- und Wasserstandsüberwachungssystem, Toleranzen der Suagfähigkeit der Beladung und der Wäscheanordnung in der Trommel sowie auch von zu hohen Heizleistungen im Verhältnis zur Energietransportleistung der Waschflotte als Wärmeübertragungsmedium. Es ist deshalb voteilhaft, den für den Waschvorgang benötigten Prozeßenergiewert E oder die totale Heizzeit τ in Abhängigkeit von wenigstens einem Teil dieser Prozeßgrößen zu wählen. So kann empirisch die benötigte Prozeßenergie E oder die korrespondierende Gesamtheizzeit τ in Abhängigkeit von der Wäscheart und Wäschemenge, der Waschflottenmenge und/oder der Waschtemperatur als Prozeßgrößen bestimmt werden und die ermittelte Funktionalität in der Wertetabelle oder Funktionsformel in der Speichereinrichtung der Auswerteeinrichtung 6 abgelegt werden. Diese Prozeßgrößen können bei Wahl eines bestimmten Waschprogramms, beispielsweise "Pflegeleicht", 30°C fest vorgegeben werden oder vorzugsweise während des Waschvorgangs vor Beginn des Temperaturregelungsprozesses gemessen werden. Dazu werden in der Regel bereits vorhandene Meßsysteme in der Waschmaschine eingesetzt, insbesondere ein Beladungsmengenerkennungssystem zum Messen der Wäschemenge und ein Zulaufmengenerkennungesystem zum Messen der Waschflottenmenge.

In den FIG 2 bis 4 sind nun die zeitlichen Temperaturverläufe der Waschflottentemperatur bei unterschiedlichen Waschverfahren dargestellt.

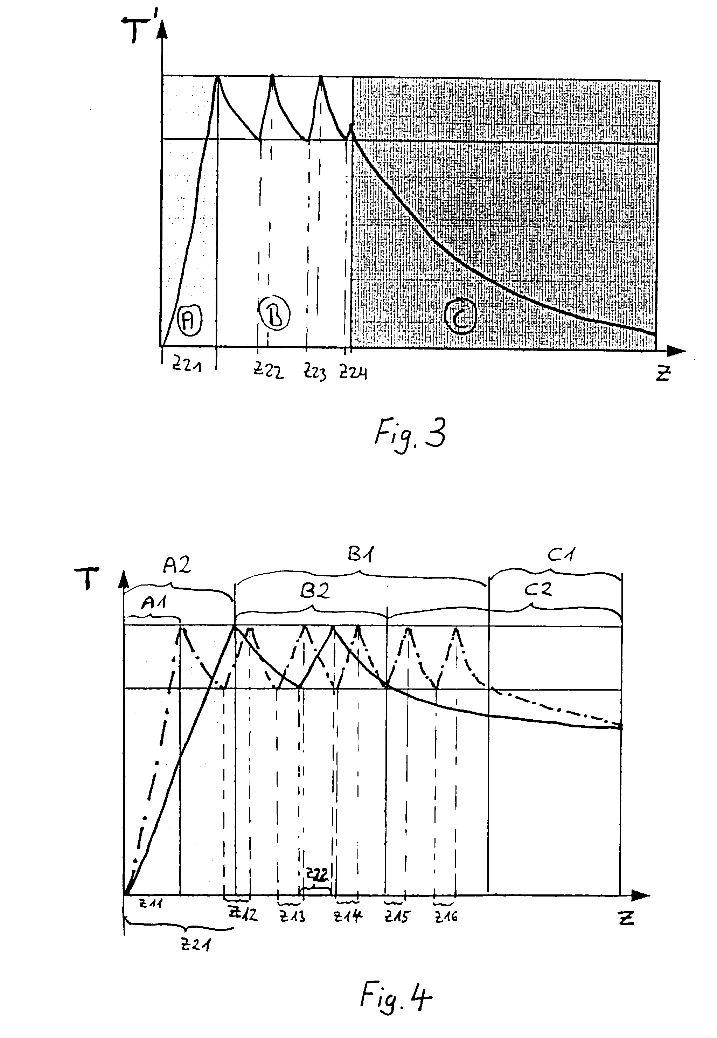

Die FIG 2 und 3 zeigen jeweils den Verlauf der Temperatur T' in Abhängigkeit von der Zeit z bei einem Waschvorgang gemäß dem Stand der Technik. Bei diesem bekannten Waschverfahren wird zu Beginn der Temperaturregelung von einer in den Ursprung des Diagramms gelegten Wasserzulauftemperatur auf eine obere Schalttemperatur T2 als maximale Waschtemperatur hochgeheizt (Programmphase A) und dann innerhalb einer fest vorgegeben Zeit in einer mit B bezeichneten Programmphase die Temperatur T' der Waschflotte innerhalb eines Regelintervalls zwischen der oberen Schalttemperatur T2 und der unteren Schalttemperatur T1 gehalten. Nach Ablauf dieser Programmphase B wird die Heizung abgeschaltet und die die Temperatur T' sinkt wieder ab.

In dem Waschprozeß gemäß FIG 2 ist nun die mit z11 bezeichnete Laufzeit der Aufheizphase A deutlich größer als die Aufheizzeit z21 in dem Waschprozeß gemäß FIG 3. Dies zeigt, daß die Energieübertragung von der Heizung zur Wäsche bei dem Waschprozeß gemäß FIG 2 deutlich besser ist als beim Waschprozeß gemäß FIG 3. Da nun jedoch bei dem bekannten Waschverfahren die nachfolgende Regelphase B immer die gleiche zeitliche Länge hat, ergeben sich in den beiden Fällen gemäß FIG 2 und FIG 3 unterschiedliche Summen der Heizzeiten z11 + z12 bzw. z21 + z22 + z23 + z24, während denen die Temperatur T' ansteigt, die Heizung also eingeschaltet ist. Dadurch werden in den beiden Fällen auch unterschiedliche Energiemengen in den Waschprozeß eingebracht. Dadurch sinkt die Temperatur T' nach Abschalten der Heizung nach der Regelphase B in einer dritten Phase C beim Prozeß gemäß FIG 2 deutlich langsamer ab als beim Prozeß gemäß FIG 3. Dadurch hat der Prozeß gemäß FIG 2 ein deutlich besseres Waschergebnis als der Prozeß gemäß FIG 3.

Im Gegensatz dazu wirkt sich beim Waschprozeß gmäß der Erfindung eine unterschiedliche Energieübertragung von der Heizeinrichtung 3 zum Prozeßmedium (Waschflotte) 2 und der Wäsche auf das Reinigungsergebnis praktisch nicht aus. In FIG 4 sind zwei Ausführungsbeispiele mit voneinander unterschiedlichen Energietransportraten dargestellt. Es ist das Temperatursignal T des Temperatursensors 4 gemäß FIG 1 über der Zeit z aufgetragen. Die Temperaturkurve des Prozesses mit der schlechteren Energieübertragung ist mit einer strichpunktierten Linie und die Temperaturkurve des Prozesses mit der besseren Energieübertragung mit einer durchgezogenen Linie veranschaulicht. Da die Summen der Heizzeiten bei beiden Prozessen gleich sind, also z11+z12+z13+z14+z15+z16 = z21+z22 , sind auch die in den Waschprozeß während der Phasen A1 und B1 beim strichpunktiert bezeichneten Temperaturverlauf sowie der Phasen A2 und B2 beim durchgezogen linierten Temperaturverlauf eingebrachten Energien gleich. Dadurch bleibt die Temperatur T in beiden auf die Regelphasen B1 und B2 folgenden Phasen C1 bzw. C2, während denen die Heizeinrichtung 3 bereits abgeschaltet ist, auf einem annähernd gleichen und hohen Temperaturniveau. Insbesondere sind die Temperaturen T am Ende der Phasen C1 und C2 gleich, so daß im Anschluß mit einer Waschflotte gleicher Temperatur weitergewaschen werden kann. Dadurch erhält man ein gleichbleibendes Waschergebnis auch bei unterschiedlichen Energietransportraten.

## Patentansprüche

1. Verfahren zum Einstellen der Temperatur (T) eines Prozeßmediums (2), bei dem
a) in einem Temperaturregelungsprozeß durch Steuern von dem Prozeßmedium (2) zugeführter thermischer Energie (Q) die Temperatur (T) des Prozeßmediums (2) auf ein vorgegebenes Regelintervall zwischen einer oberen Schalttemperatur (T2) und einer unteren Schalttemperatur (T1) geregelt wird,
b) während des Temperaturregelungsprozesses fortlaufend die Summe der seit Beginn des Temperaturregelungsprozesses dem Prozeßmedium (2) zugeführten thermischen Energie (Q) ermittelt wird und
c) die Zufuhr von thermischer Energie (Q) zum Prozeßmedium (2) unterbrochen wird, wenn die genannte Summe der zugeführten thermischen Energie (Q) einen vorgegebenen Prozeßenergiewert überschreitet.

2. Verfahren nach Anspruch 1, bei dem die Anfangstemperatur des Prozeßmediums (2) zu Beginn des Temperaturregelungsprozesses unterhalb der unteren Schalttemperatur (T1) liegt und bei dem bei Überschreiten des Prozeßenergiewertes beim Temperaturregelungsprozeß die Zufuhr von thermischer Energie (Q) zum Prozeßmedium (2) nur dann unterbrochen wird, wenn im Prozeßmedium (2) eine vorbestimmte Minimaltemperatur oberhalb der unteren Schalttemperatur (T1) wenigstens einmal erreicht worden ist.

3. Verfahren nach Anspruch 2, bei dem die Minimaltemperatur der oberen Schalttemperatur (T2) entspricht.

4. Verfahren nach einem der vorhergehenden Ansprüche, bei dem zum Zuführen der thermischen Energie dem Prozeßmedium (2) eine Heizeinrichtung (3) mit einer vorgegebenen Heizleistung zugeordnet wird und als Maß für die Summe der seit Beginn des Temperaturregelungsprozesses dem Prozeßmedium (2) zugeführten thermischen Energie (Q) die jeweilige Laufzeit des Temperaturregelungsprozesses sowie als Maß für den Prozeßenergiewert eine zugehörige vorbestimmte Prozeßdauer verwendet werden und die Heizleistung der Heizeinrichtung (3) aus dem zeitlichen Verlauf der Temperatur des Prozeßmediums (2) beim Aufheizen bestimmt wird.

5. Verfahren nach nach einem der vorhergehenden Ansprüche, bei dem der Prozeßenergiewert in Abhängigkeit von wenigstens einer Prozeßgröße bestimmt wird und zum Bestimmen des Prozeßenergiewertes eine vorab ermittelte Wertetabelle oder Eichformel verwendet wird.

6. Verfahren nach Anspruch 5, bei dem als Prozeßgrößen wenigstens die Wäschemenge und die Waschflottenmenge herangezogen werden.

7. Vorrichtung zum Einstellen der Temperatur eines Prozeßmediums (2) mit
a) einer Heizeinrichtung (3) zum Zuführen von thermischer Energie (Q) zum Prozeßmedium (2),
b) einem Temperatursensor (4) zum Messen der Temperatur des Prozeßmediums (2),
c) einer Regeleinrichtung (5), die mit der Heizeinrichtung (3) und dem Temperatursensor (4) jeweils verbunden ist und in einem Temperaturregelungsprozeß durch Steuern der Heizeinrichtung (3) die Temperatur des Prozeßmediums (2) auf ein vorgegebenes Regelintervall zwischen einer oberen Schalttemperatur (T2) und einer unteren Schalttemperatur (T1) regelt,
d) einer Auswerteeinrichtung (6), die mit der Regeleinrichtung (5) verbunden ist und während des Temperaturregelungsprozesses fortlaufend die Summe der seit Beginn des Temperaturregelungsprozesses dem Prozeßmedium (2) von der Heizeinrichtung (3) zugeführten thermischen Energie (Q) ermittelt und der Regeleinrichtung (5) ein Abschaltsignal (AS) zuführt, wenn die genannten Summe der zugeführten thermischen Energie (Q) einen vorgegebenen Prozeßenergiewert überschreitet,
e) wobei die Regeleinrichtung (5) die Heizeinrichtung (3) bei Vorliegen des Abschaltsignals (AS) abschaltet

8. Vorrichtung nach Anspruch 7, bei der die Regeleinrichtung (5) die Heizeinrichtung (3) in einem Aufheizprozeß zu Beginn des Temperaturregelungsprozesses so steuert, daß dem Prozeßmedium (2) solange thermische Energie (Q) zugeführt wird, bis die obere Schalttemperatur (T2) erreicht ist.

9. Vorrichtung nach einem der Ansprüche 7 und 8, bei der die Auswerteeinrichtung (6) das Abschaltsignal (AS) nur dann erzeugt, wenn zusätzlich im Prozeßmedium (2) eine vorbestimmte Minimaltemperatur oberhalb der unteren Schalttemperatur (T1) wenigstens einmal erreicht worden ist, wobei die Minimaltemperatur der oberen Schalttemperatur (T2) entspricht.

10. Vorrichtung nach einem der Ansprüche 7 bis 9, bei der die Heizeinrichtung (3) eine bestimmte Heizleistung aufweist und die Auswerteeinrichtung (6) als Maß für die Summe der seit Beginn des Temperaturregelungsprozesses dem Prozeßmedium (2) zugeführten thermischen Energie (Q) die jeweilige Laufzeit des Temperaturregelungsprozesses sowie als Maß für den Prozeßenergiewert eine zugehörige vorbestimmte Prozeßdauer ermittelt.

11. Vorrichtung nach Anspruch 10, bei der die Auswerteeinrichtung (6) die Heizleistung der Heizeinrichtung (3) aus dem zeitlichen Verlauf der Temperatur des Prozeßmediums (2) beim Aufheizprozeß bestimmt.

12. Vorrichtung nach einem der vorhergehenden Ansprüche, bei der die Auswerteeinrichtung (6) den Prozeßenergiewert aus wenigstens einer Prozeßgröße ermittelt und die Auswerteeinrichtung (6) eine Speichereinrichtung umfaßt zum Ablegen einer vorab ermittelten Wertetabelle oder Eichformel zum Bestimmen des Prozeßenergiewertes.

13. Waschmaschine mit einem Waschbehälter mit einer Vorrichtung nach Anspruch 12, bei der die Auswerteeinrichtung als Prozeßgrößen die Wäschemenge und die Waschflottenmenge verwertet.

## Claims

1. Method of setting the temperature (T) of a processing medium (2), in which
a) in a temperature adjustment process by controlling the heat energy (Q) supplied to the processing medium (2) the temperature (T) of the processing medium (2) is adjusted to a predetermined adjustment interval between an upper switching temperature (T2) and a lower switching temperature (T1)
b) during the temperature adjustment process the sum of heat energy (Q) supplied to the processing medium (2) since the start of the temperature adjustment process is determined and
c) the supply of heat energy (Q) to the processing medium (2) is interrupted when the said sum of heat energy (Q) supplied exceeds a predetermined process energy value.

2. Method according to claim 1, wherein the starting temperature of the processing medium (2) at the start of the temperature adjustment process lies below the lower switching temperature (T1) and wherein when the process energy value is exceeded in the temperature adjustment process the supply of heat energy (Q) to the processing medium (2) is only interrupted if in the processing medium (2) a predetermined minimum temperature above the lower switching temperature (T1) is reached at least once.

3. Method according to claim 2, wherein the minimum temperature corresponds to the upper switching temperature (T2).

4. Method according to one of the preceding claims, in which in order to supply the heat energy to the processing medium (2) a heating device (3) with a specified heating power is provided, and as a measure of the sum of the heat energy (Q) supplied to the processing medium (2) since the start of the temperature adjustment process the respective running time of the temperature adjustment process, and as a measure of the process energy value an associated predetermined process duration are used and the heating power of the heating device (3) is determined from the curve of the temperature, set against time, of the processing medium (2) during heating.

5. Method according to one of the preceding claims, in which the process energy value is determined as a function of at least one process variable and in order to determine the process energy value a previously determined table of values or calibration formula is used.

6. Method according to claim 5, in which as process variables at least the quantity of laundry and the quantity of liquor are used.

7. Device for setting the temperature of a processing medium (2) having
a) a heating device (3) for supplying heat energy (Q) to the processing medium (2),
b) a temperature sensor (4) for measuring the temperature of the processing medium (2),
c) a control device (5), which is connected respectively to the heating device (3) and the temperature sensor (4) and which in a temperature adjustment process, by controlling the heating device (3) sets the temperature of the processing medium (2) to a predetermined adjustment interval between an upper (T2) and a lower (T1) switching temperature,
d) an evaluation device (6), which is connected to the control device (5) and during the temperature adjustment process continuously determines the sum of the heat energy (Q) supplied to the processing medium (2) since the start of the temperature adjustment process and supplies to the control device (5) a switch-off signal (AS) if the said sum of supplied heat energy (Q) exceeds a predetermined process energy value,
e) wherein the control device (5 ) switches off the heating device (3) in the presence of the switch-off signal (AS).

8. Device according to claim 7, in which the control device (5) controls the heating device (3) in a heating process at the start of the temperature adjustment process in such a manner that heat energy (Q) is supplied to the processing medium (2) until the upper switching temperature (T2) is reached.

9. Device according to one of claims 7 or 8, in which the evaluation device (6) only generates the switch-off signal (AS) if in addition in the processing medium (2) a predetermined minimum temperature above the lower switching temperature (T1) has been reached at least once, the minimum temperature corresponding to the upper switching temperature (T2).

10. Device according to one of claims 7 to 9, in which the heating device (3) has a certain heating power and the evaluation device (6) determines as a measure of the heat energy (Q) supplied to the processing medium (2) since the start of the temperature adjustment process the respective running time of the temperature adjustment process and as a measure of the process energy value an associated predetermined process duration.

11. Device according to claim 10, in which the evaluation device (6) determines the heating power of the heating device (3) from the curve of temperature, set against time, of the processing medium (2) in the heating process.

12. Device according to one of the preceding claims, in which the evaluation device (6) determines the process energy value from at least one process variable and the evaluation device (6) comprises a storage device for depositing a previously determined table of values or calibration formula for determining the process energy value.

13. Washing machine having a washing container with a device according to claim 12, in which the evaluation device utilises as process variables the quantity of laundry and the quantity of liquor.

## Revendications

1. Procédé de réglage de la température (T) d'un milieu de procédé (2) où
a) lors d'un procédé de réglage de température, par une commande de l'énergie thermique (Q) amenée par le milieu de procédé (2), la température (T) du milieu de procédé est réglée à un intervalle de réglage prédéterminé entre une température de commutation supérieure (T2) et une température de commutation inférieure (T1),
b) est déterminée pendant le procédé de réglage de la température continuellement la somme de l'énergie thermique (Q) amenée depuis le début du procédé de réglage de température au milieu du procédé (2) et
c) l'amenée de l'énergie thermique (Q) au milieu de procédé (2) est interrompue lorsque la somme indiquée de l'énergie thermique amenée (Q) dépasse une valeur d'énergie de procédé prédéterminée.

2. Procédé selon la revendication 1, où la température initiale du milieu de procédé (2) au début du procédé de réglage de température, se situe en dessous de la température de commutation inférieure (T1) et où, lors d'un dépassement de la valeur d'énergie du procédé lors du procédé de réglage de la température, l'amenée d'énergie thermique (Q), vers le milieu de procédé (2) est interrompue seulement lorsque dans le milieu de procédé (2), une température minimale prédéterminée au-dessus de la température de commutation inférieure (T1) a été atteinte au moins une fois.

3. Procédé selon la revendication 2, où la température minimale correspond à la température de commutation supérieure (T2).

4. Procédé selon l'une des revendications précédentes, où il est associé, pour l'amenée de l'énergie thermique, au milieu de procédé (2) un dispositif de chauffage (3) avec une puissance de chauffe prédéfinie et où sont utilisées, comme mesure de la somme de l'énergie thermique (Q) amenée depuis le début du procédé de réglage de température au milieu de procédé (2), la durée respective du procédé de réglage de la température et comme mesure pour la valeur d'énergie de procédé, une durée de procédé prédéfinie associée, et où la puissance de chauffe du dispositif de chauffage (3) est déterminée à partir de l'allure temporelle de la température du milieu de procédé (2) lors de l'échauffement .

5. Procédé selon l'une des revendications précédentes, où la valeur d'énergie du procédé est déterminée en fonction d'au moins une grandeur de procédé et, pour déterminer la valeur d'énergie du procédé, il est utilisé un tableau de valeurs ou une formule d'étalonnage déterminée préalablement.

6. Procédé selon la revendication 5, où comme grandeurs de procédé, on fait appel à au moins la quantité de linge et la quantité de bain détergent.

7. Dispositif de réglage de la température d'un milieu de procédé avec
a) un dispositif de chauffage (3) pour amener de l'énergie thermique (Q) au milieu de procédé (2),
b) un capteur de température (4) pour mesurer la température du milieu de procédé (2),
c) un dispositif de réglage (5) qui est relié respectivement au dispositif de chauffage (3) et au capteur de température (4) et qui règle dans un procédé de réglage de température, par une commande du dispositif de chauffage (3), la température du milieu de procédé (2) à un intervalle de réglage prédéfini entre une température de commutation supérieure (T2) et une température de commutation inférieure (T1),
d) un dispositif d'évaluation (6) qui est relié au dispositif de réglage (5) et qui détermine pendant le procédé de réglage de la température continuellement la somme de l'énergie thermique (Q) amenée depuis le début du procédé de réglage de la température au milieu de procédé (2) depuis le dispositif de chauffage (3) et transmet au dispositif de réglage (5) un signal de coupure (AS) lorsque la somme précitée de l'énergie thermique amenée (Q) dépasse une valeur d'énergie de procédé définie,
e) où le dispositif de réglage (5) coupe le dispositif de chauffage (3) en présence d'un signal de coupure (AS).

8. Dispositif selon la revendication 7, où le dispositif de réglage (5) commande le dispositif de chauffage (3) lors d'un procédé d'échauffement au début du procédé de réglage de la température de façon qu'il soit amené au milieu de procédé (2) de l'énergie thermique (Q) jusqu'à ce que la température de commutation supérieure (T2) soit atteinte.

9. Dispositif selon l'une des revendications 7 et 8, où le dispositif d'évaluation (6) produit le signal de coupure (AS) seulement lorsqu'en plus dans le milieu de procédé (2), une température minimale prédéterminée au-dessus de la température de commutation inférieure (T1) a été atteinte au moins une fois, où la température minimale correspond à la température de commutation supérieure (T2).

10. Dispositif selon l'une des revendications 7 à 9, où le dispositif de chauffage (3) présente une puissance de chauffe définie, et où le dispositif d'évaluation (6), comme mesure pour la somme de l'énergie thermique (Q) amenée depuis le début du procédé de réglage de la température au milieu de procédé (2), détermine la durée respective du procédé de réglage de la température et, comme mesure pour la valeur d'énergie du procédé, une durée de procédé prédéterminée associée.

11. Dispositif selon la revendication 10, où le dispositif d'évaluation (6) définit la puissance de chauffe du dispositif de chauffage (3) à partir de l'allure temporelle de la température du milieu de procédé (2) lors du procédé d'échauffement.

12. Dispositif selon l'une des revendications précédentes, où le dispositif d'évaluation (6) détermine la valeur d'énergie du procédé à partir d'au moins une grandeur de procédé et où le dispositif d'évaluation (6) comprend un dispositif de stockage pour stocker un tableau de valeurs ou une formule d'étalonnage déterminée préalablement, pour définir la valeur d'énergie du procédé.

13. Machine à laver avec une cuve de lavage avec un dispositif selon la revendication 12, où le dispositif d'évaluation utilise comme grandeurs de procédé la quantité de linge et la quantité de bain détergent.
